# EUROPEAN PATENT APPLICATION

(11) **EP 1 710 868 A2**
(43) Date of publication of application: **11.10.2006**
(21) Application number: 06111519.2
(22) Date of filing: 22.03.2006
(51) Int. Cl.: H01R 13/52, H02G 15/04, H02G 15/013

(54) **Sealing element for terminal portions of multipolar cables**

(30) Priority: 08.04.2005 IT MI20050121
(71) Applicant: iGUZZINI ILLUMINAZIONE S.p.A., 62019 Recanati-Macerata (IT)
(72) Inventor: Guzzini, Giannunzio, 62019, RECANATI (Macerata) (IT)
(74) Representative: De Gregori, Antonella

(57) **Abstract**

A sealing element for terminal portions of multipolar cables, comprising a series of single conductors contained in an outer sheath, comprises a cylindrical body (12) made of a rubber material suitable for clamping onto the outer surface of the outer sheath and a bottom wall (13) of the cylindrical body (12) equipped with a series of channels (14) suitable for clamping onto the outer surface of the single conductors.

## Description

The present invention relates to a sealing element for terminal portions of multipolar cables.

Multipolar cables consist of a series of single conductors covered by an insulator, immersed in a filling material and thus enveloped by an outer sheath.

At present, all sealing elements, or washers, only act on the outer sheath of cables for obtaining sealing. This solution functions correctly and ensures full sealing only if the outer sheath of the cable is not "interfered with", or the cable unsheathed.

This is due to the fact that multipolar cables do not guarantee sealing on the contact surface between the insulations of the single conductors and the internal part of the sheath even if filling materials are present.

In particular, in the case of built-in lighting appliances, the multipolar cable follows a course which runs from the lighting body to the derivation box, for example inserted in the ground or in any case exposed to atmospheric agents.

The terminal portions of multipolar cables, inserted in the lighting appliance or in the derivation box, are often unsheathed mainly for use in increasingly miniaturized lighting bodies such as, for example, led products, in which the spaces for the cables are reduced.

It has been verified that if the sheath is interrupted, which specifically occurs in correspondence with the unsheathed terminal portions, the depression generated by the lighting body due to heating allows water to penetrate through the interstices present between the single conductors of the multipolar cables.

In this case, the solution generally adopted is to effect an electrical connection with the single conductors and protect the whole unit with self-agglomerating tape applied on site by the installer. The connection, however, may not be effected correctly, which is difficult to verify. If the tape is not applied correctly inside the product, it can be "engulfed" by water or humidity with the high risk of damaging the product.

Furthermore, the connection by self-agglomerating tape cannot be removed for repair or maintenance operations of the appliances for example, but it is necessary to cut the wires.

Another solution adopted for protecting lighting appliances from possible water infiltrations, without protecting the connections described above, consists in the arrangement of a resining of the electric circuits inside the lighting appliances. The water or humidity which possibly reach the inside of the appliance would not however come into contact with the electronic circuits.

The drawbacks of this solution mainly relate to the high costs for effecting the resining, which must be very accurate and it is almost impossible to verify whether it has been correctly applied.

Furthermore, it is not possible to substitute these appliance in case of breakdown.

An objective of the present invention is to provide a sealing element for terminal portions of multipolar cables which effects sealing on the unsheathed terminals and is easy to apply.

A further objective of the present invention is to provide a sealing element for terminal portions of multipolar cables with reduced dimensions.

Another objective of the present invention is to provide a sealing element for terminal portions of multipolar cables which is particularly simple and functional, with reduced costs.

These objectives according to the present invention are achieved by providing a sealing element for terminal portions of multipolar cables as specified in claim 1.

Further characteristics of a sealing element for terminal portions of multipolar cables are object of the dependent claims.

The characteristics and advantages of a sealing element for terminal portions of multipolar cables according to the present invention will appear more evident from the following illustrative and nonlimiting description, referring to the enclosed schematic drawings, in which:
figure 1 is a perspective view of a first embodiment of a sealing element for terminal portions of multipolar cables according to the present invention;
figure 2 is a section of the sealing element of figure 1 according to a track passing through the centre of two opposite channels;
figure 3 is a side view of a second embodiment of a sealing element for terminal portions of multipolar cables according to the present invention;
figure 4 is a plan view of the sealing element of figure 3;
figure 5 is a section of the sealing element shown in figures 3 and 4 according to the track V-V of figure 4;
figure 6 shows a sealing element according to the present invention applied to a terminal portion of an installed multipolar cable.

With reference to the figures, these show a sealing element for terminal portions of multipolar cables indicated as a whole with 10.

Multipolar cables 11 consist of a series of single conductors 2 covered by an insulator, immersed in filling material and thus contained in an outer sheath 3.

Terminal portions of multipolar cables 11 which, when operating, are connected to a lighting body, or to a derivation box, must be "unsheathed" to allow connection with a minimum encumbrance. By eliminating a section of outer sheath 3, it is in fact only possible to enter into the containment spaces of the electric appliances with single conductors 2, which require little space.

The sealing element 10, according to the present invention, comprises a cylindrical body 12 made of a rubber material delimited at one end by a bottom wall 13 equipped with a series of channels 14, in a number equal to at least two.

The internal diameter of the cylindrical body 12 is substantially equal to the outer diameter of the sheath 3 of the multipolar cable 11. The cylindrical body 12 is in fact clamped, when operating, onto the outer surface of the outer sheath 3.

The channels 14, on the other hand, have a diameter which is substantially equal to the outer diameter of the single conductors 2, as, when operating, they must effect the clamping of said single conductors 2 onto the outer surface, i.e. on the insulating material which covers them.

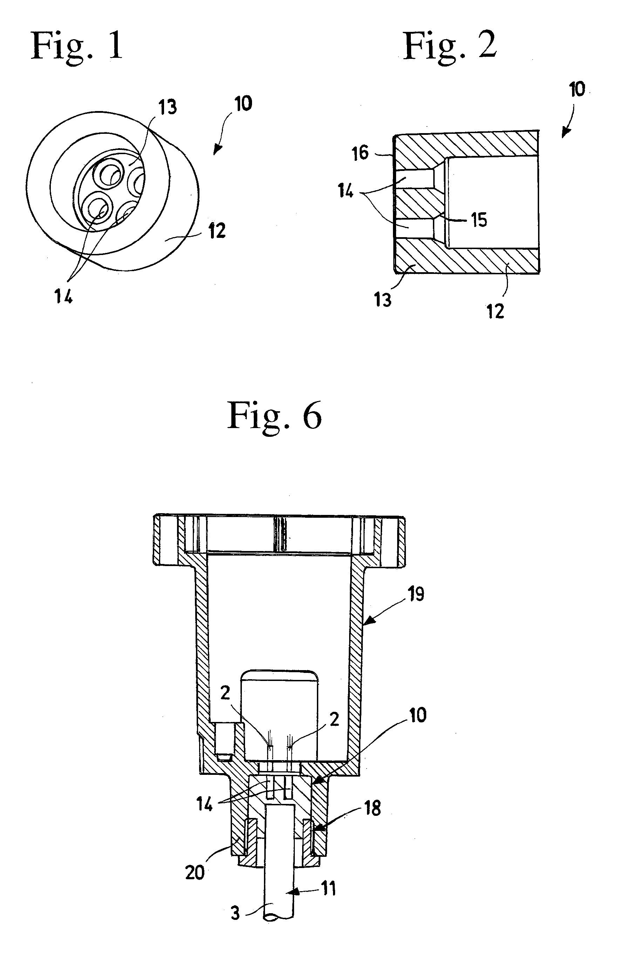

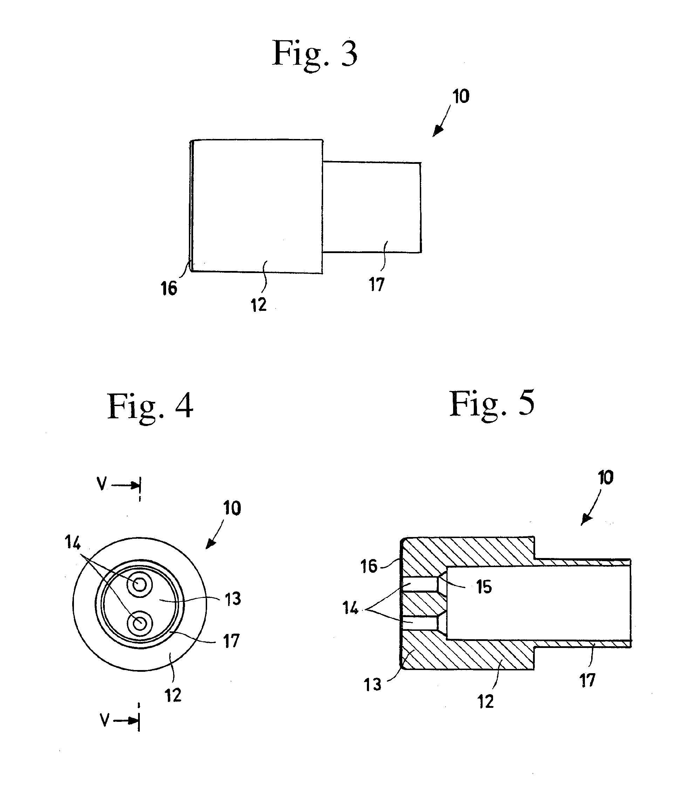

The channels 14, which in the embodiments illustrated, are equal to two (figures 3-5) or four (figures 1 and 2), can be in any number in relation to the type of multipolar cable 11 on which the sealing is to effected, i.e. by the number of conductors 2 of which the cable 11 consists.

In order to facilitate the insertion of the single conductors 2 into the channels 14, a hollow tapered annular portion 15 is situated on the bottom wall 13 around each channel 14.

Furthermore, the bottom wall can comprise an outer film 16 which seals the channels 14 until the activating of the sealing element 10. During the installation, only the necessary channels 14 can be opened, by perforating the outer film 16 for the passage of the single conductors 2.

A further embodiment of the sealing element for terminal portions of multipolar cables 11 according to the present invention comprises, at one opposite end with respect to the bottom wall 13, a second cylindrical extending portion 17 which extends from the cylindrical body 12.

The second cylindrical extending portion 17, which substantially has the same internal diameter as the cylindrical body 12 and a lesser thickness, effects the sealing on a longer section of the outer sheath 3.

The sealing element for terminal portions of multipolar cables according to the present invention is preferably produced by moulding in a single piece in a deformable rubber material for obtaining the sealing.

Figure 6 shows a sealing element 10 according to the present invention applied to a terminal portion of a multipolar cable 11 and connected by means of a wire-clip element 18 to a containment space 19 of a built-in lighting body, not shown.

The wire-clip element 18, of the known type, is inserted with a clearance onto the multipolar cable 11. After tightening on a suitable threaded seat 20 of the containment space 19, it then compresses the sealing element 10 creating a sealing on the terminal portion of the multipolar cable 11.

The sealing element for terminal portions of multipolar cables, object of the present invention, has the advantage of guaranteeing with a single clamping, two different types of sealing.

In addition to common clamping onto the outer sheath of multipolar cables, the sealing element according to the present invention advantageously provides protection with respect to infiltrations of water through the cavities present inside the multipolar cable.

The sealing element for terminal portions of multipolar cables according to the present invention advantageously provides a connection which can be inspected or removed without damaging the multipolar cable, to the electric appliances connected.

## Claims

1. A sealing element for terminal portions of multipolar cables comprising a series of single conductors contained in an outer sheath, **characterized in that** it comprises a cylindrical body (12) made of a rubber material suitable for clamping onto the outer surface of said outer sheath and a bottom wall (13) of said cylindrical body (12) equipped with a series of channels (14) suitable for clamping onto the outer surface of said single conductors.

2. The sealing element according to claim 1, **characterized in that** on said bottom wall (13) around each of said channels (14) there is a hollow tapered annular portion (15) for the insertion of said single conductors.

3. The sealing element according to claim 1, **characterized in that** said bottom wall (13) is equipped with two channels (14).

4. The sealing element according to claim 1, **characterized in that** said bottom wall (13) is equipped with four channels (14).

5. The sealing element according to claim 1, **characterized in that** said bottom wall (13) comprises an outer film (16) for the closing of said channels (14), suitable for being perforated before use for the passage of said single conductors.

6. The sealing element according to claim 1, **characterized in that** said cylindrical body (12) comprises at an opposite end with respect to said bottom wall (13), a second cylindrical extending portion (17), said second cylindrical extending portion (17) substantially having the same internal diameter as said cylindrical body (12).

7. The sealing element according to claim 6, **characterized in that** said second cylindrical extending portion (17) has a lesser thickness with respect to said cylindrical body (12).

8. The sealing element according to any of the previous claims, **characterized in that** it is moulded in a single piece.
